# EUROPÄISCHE PATENTSCHRIFT

(11) **EP 1 005 607 B1**
(45) Veröffentlichungstag und Bekanntmachung des Hinweises auf die Patenterteilung: **25.06.2003**
(21) Anmeldenummer: 98946381.5
(22) Anmeldetag: 19.08.1998
(51) Int. Cl.: F02C 7/22, F04B 15/08, F04B 9/113, F02C 9/30, F02C 3/22

(54) **VERFAHREN UND ANORDNUNG FÜR DIE ELEKTRONISCH GEREGELTE FÖRDERUNG UND ZUMESSUNG KRYOGENER MEDIEN BEI FLUGTRIEBWERKEN**
METHOD AND DEVICE FOR THE ELECTRONICALLY CONTROLLED SUPPLY AND DOSING OF CRYOGENIC MEDIA IN AIRCRAFT ENGINES
PROCEDE ET DISPOSITIF PERMETTANT LE TRANSPORT ET LE DOSAGE REGLES PAR VOIE ELECTRONIQUE D'AGENTS CRYOGENES DANS LE CAS DE GROUPES MOTO-PROPULSEURS

(30) Priorität: 21.08.1997 DE 19736337
(43) Veröffentlichungstag der Anmeldung: 07.06.2000
(73) Patentinhaber: INDUSTRIEANLAGEN-BETRIEBSGESELLSCHAFT M.B.H., 85521 Ottobrunn (DE)
(72) Erfinder: TÖNSKÖTTER, Hans, D-85591 Vaterstetten (DE)
(74) Vertreter: Bohnenberger, Johannes, Dr.
(86) Internationale Anmeldenummer: EP9805267
(87) Internationale Veröffentlichungsnummer: WO99010640

(56) Entgegenhaltungen:
- DE-A- 3 105 649
- DE-A- 3 342 381
- DE-A- 4 107 846
- DE-A- 4 221 805
- US-A- 3 304 882
- US-A- 3 756 456

## Beschreibung

Die Erfindung betrifft ein Verfahren und die zur Realisierung erforderliche Anordnung mit Bauelementen zur elektronisch geregelten Förderung und Zumessung kryogener Medien, wie z.B. Flüssigwasserstoff bei -250°C, für Flugtriebwerke und für industrielle Anwendungen.

Der Stand der Technik bei der Förderung und Zumessung des Kraftstoffes für Flugtriebwerke (Strahltriebwerke) ist dadurch gekennzeichnet, daß als Kraftstoff Kerosin verwendet wird. Das Kerosin wird in der Regel über eine Zahnradpumpe, die zur Vermeidung von Kavitation häufig eine Zentrifugalpumpe als Vorstufe aufweist, gefördert und über ein separates Zumeßventil der Brennkammer des Triebwerks zugeführt. Da die Pumpe über das Hilfsgetriebe vom Triebwerk direkt angetrieben wird, ist sie so zu dimensionieren, daß sie bei allen Drehzahlen des Triebwerkrotors den jeweils maximal auftretenden Kraftstoffbedarf für die Rotorbeschleunigung im bodennahen Flug abdecken kann. In allen anderen Betriebssituationen fördert sie dann ständig einen Überschuß, der entweder zum Kraftstofftank oder zum Pumpeneintritt zurückgeführt wird.

Bei kryogenen Kraftstoffen, wie z.B. Flüssigwasserstoff, ist eine derartige Rezirkulation nicht möglich, da dies zur Dampfblasenbildung am Pumpeneintritt (Kavitationsgefahr) bzw. zu nicht akzeptablen Verdampfungsverlusten im Kraftstofftank führen würde. Aus diesem Grund ist für kryogene Medien eine regelbare, durchsatzvariable Kraftstoff-Förderung, die jeweils nur den tatsächlich vom Triebwerk benötigten Kraftstoff (ohne Überschuß) bereitstellt, unumgänglich.

Als Stand der Technik ist das auf Flüssigwasserstoff umgerüstete russische Triebwerk NK-88 bekannt (V.A. Sosounov, V.N. Ovlov: "Experimental Turbofan using Liquid Hydrogen and Natural Gas and Fuel", AIAA 90-2421, Juli 1990).

Weitere Ausführungen von kzy ogenen Pumpen sind aus US-A-3 304 882 bekannt.

Bei diesem Triebwerk wird eine aus der Raketentechnik übernommene 2-stufige Turbo-Zentrifugalpumpe verwendet. Die Pumpe wird zur Regelung des Fördervolumens, realisiert über Drehzahlvariation, mit Druckluft vom Triebwerk betrieben. Die Zumessung des Treibstoffs erfolgt über ein Gaszumessventil, das stromab vom Wärmetauscher/Verdampfer installiert ist. Zur Steuerung der Kryo-Ventile wird Helium verwendet.

Den nächsten Stand der Technik bildet die in der US 3.304.882 beschriebene Speiseeinrichtung für kryogene Fluide, bei der das Fluid über eine Kolbenpumpe gefördert wird, die über einem geregelten hydraulischen Linearmotor angetrieben wird. Die Kolbenpumpe für die Förderung des kryogenen Treibstoffs und der sie antreibende hydraulische Linearmotor bilden eine gekoppelte Einheit.

Die vorstehend beschriebenen Bauprinzipien haben mehrere Nachteile: Die hohe Anzahl der Komponenten bedingt eine hohe Komplexität des Gesamtsystems, die wegen der zu fordernden sehr hohen Betriebszuverlässigkeit unerwünscht ist. Die Isolationsmöglichkeit der Zentrifugalpumpe ist prinzipbedingt schlecht. Ebenfalls ungünstig ist, dass für die Pumpe und für das Zumessventil je ein Regelkreis eingerichtet werden muß, die funktional gekoppelt sind. Ferner weist die Zentrifugalpumpe wegen des großen Spalteinflusses bei der Förderung von Flüssigwasserstoff einen schlechten Wirkungsgrad auf. Zu erwähnen ist noch die Verschlechterung des Triebwerkwirkungsgrades durch Zapfluftentnahme für den Pumpenantrieb.

Weitere Konzepte und Untersuchungen zum Stand der Technik in: William Conrad: "Turbine Engine Altitude Chamber and Flight Testing with Liquid Hydrogen", DGLR/DFVLR Symposium on Hydrogen in Air Transportation, Stuttgart, 1979.

Ziel der vorliegenden Erfindung ist es, ein Verfahren und die zur Realisierung erforderlichen Anordnungen anzugeben, die gegenüber dem Stand der Technik folgende Vorzüge aufweisen:
1. Das Kraftstoff-Förder- und -Zumeßsystem soll vereinfacht, die Zuverlässigkeit soll erhöht und die Herstellungs- und die Wartungskosten sollen verringert werden.
2. Der Pumpenwirkungsgrad und damit der Triebwerkswirkungsgrad sollen verbessert werden.
3. Das Gesamtgewicht der benötigten Komponenten soll verringert werden.
4. Kavitation durch Verdampfungsvorgänge in der Pumpe soll ausgeschlossen werden.
5. Druckschwankungen in der Treibstoff-Förderung sollen minimal sein, eine pulsationsfreie, stabile Verbrennung ist sicherzustellen.
6. Die hohen Anforderungen an kurze Beschleunigungs- und Verzögerungszeiten und das schnelle Ansprechen der Triebwerke sollen auch mit kryogenen Treibstoffen sichergestellt werden.
7. Pro Triebwerk soll nur ein Regelkreis für die Kraftstoff-Förderung und -Zumessung erforderlich sein, sofern nicht Redundanzen gewünscht werden.
8. Dichtungs- und Isolationsprobleme, wie sie bei Zentrifugalpumpen auftreten, sollen ausgeschaitet werden.

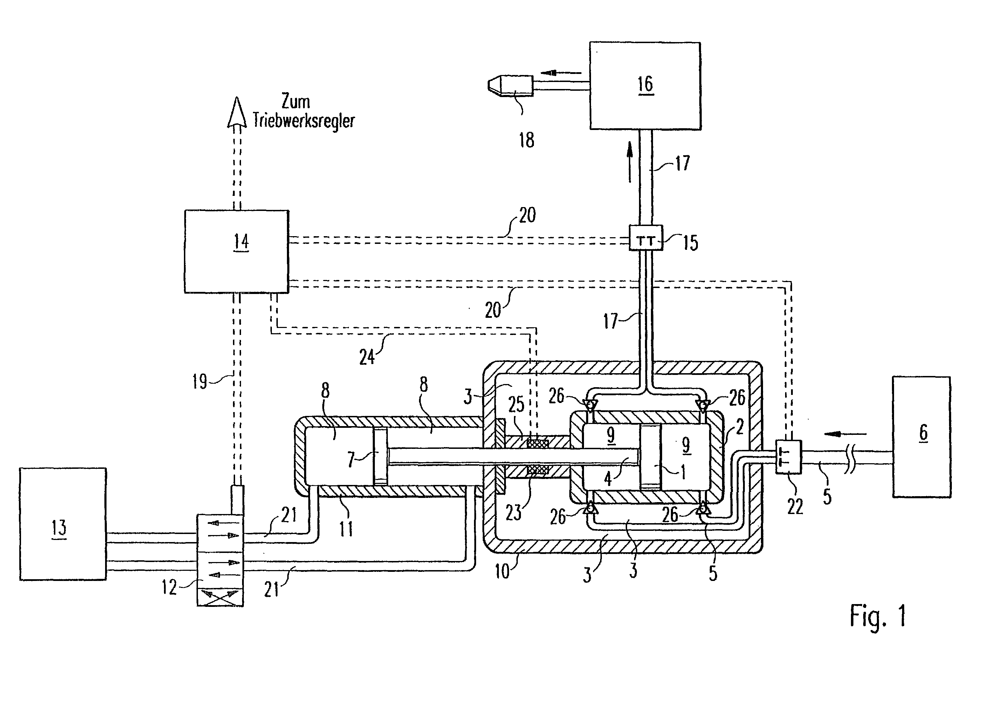

Diese Ziele werden mit dem erfindungsgemäßen Verfahren und der zugehörigen Anordnung von Elementen wie folgt erreicht (Figur 1):

Der kryogene Treibstoff wird durch eine Kolbenpumpe vom Kryotank 6 zu den Einspritzdüsen 18 gefördert. Angetrieben wird der Pumpenkolben 1 der Kryopumpe durch einen mittels einer axial bewegbaren Kolbenstange 4 gekoppelten Hydraulikkolben 7. Der Hydraulikdruck wird von einer Hydraulik-Versorgungseinheit 13 bereitgestellt; der Hydraulikstrom zur Erzeugung der Hubbewegungen des Hydraulikkolbens 7 wird von einem Regler 14, vorzugsweise digitaler Bauart, mittels Servoventil 12 gesteuert.

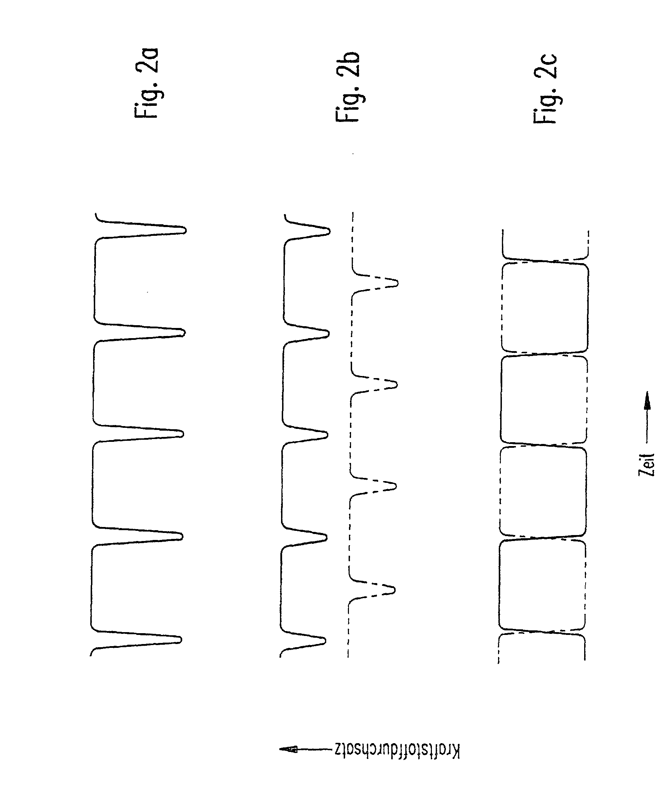

Als Kolbenpumpe kann eine doppeltwirkende Pumpe eingesetzt werden, wobei jedoch ein Abfallen des Förderdurchsatzes beim Durchgang des Pumpenkolbens 1 im Umkehrpunkt in Kauf genommen werden muß (Figur 2a). Um eine pulsationsarme Kraftstoff-Förderung zu erreichen, können zwei einfachwirkende Pumpensysteme parallel mit einer Phasenverschiebung von 180° zwischen den Arbeitstakten der beiden Pumpenkolben 1 eingesetzt werden. Dadurch kompensieren sich in den Kolbenumkehrpunkten der Druckabfall der einen und der Druckanstieg der anderen Kolbenpumpe, so daß in der Summe ein weitgehend konstanter Förderstrom und konstanter Förderdruck erreicht werden kann (Figur 2c). Eine andere Art der Glättung des Druckprofils läßt sich durch den Einsatz von zwei doppeltwirkenden Pumpen, die um 90° phasenverschoben arbeiten, erreichen (Figur 2b). Der noch verbleibende geringe, kurzzeitige Druckabfall in den jeweiligen Kolbenumkehrpunkten wird durch das Speichervolumen des nachgeschalteten Wärmetauschers 16 weitgehend ausgeglichen. Auch eine größere Anzahl parallel geschalteter Pumpen als zwei und andere als die oben genannten Winkel der Phasenverschiebung sind Bestandteil des erfinderischen Anspruchsumfangs.

Wenn Pumpensysteme parallel eingesetzt werden, ergibt sich bei deren elektrischer und mechanischer Entkopplung eine die Betriebssicherheit steigernde Redundanz, wobei bei Ausfall eines Pumpensystems allerdings pulsierende Schwankungen im Durchsatz und im Druck in Kauf genommen werden müssen. Zur Erhöhung der Sicherheit und zur besseren Fehlererkennung können die digitale Regelung zwei- oder mehrkanalig und die elektrischen Teile des Systems ein- oder mehrfach redundant ausgeführt werden.

Das erfindungsgemäße Verfahren erfordert in der Realisierung folgende Bauelemente und Anordnung (Figur 1):

Die Pumpe für das kryogene Medium besteht aus einem Pumpenkolben 1, der in einem Pumpengehäuse 2 läuft, dessen Arbeitsräume 9 mit dem zu fördernden kryogenen Treibstoff befüllt sind. Das Pumpengehäuse 2 der Kryopumpe wird umgeben von einem Isolationsgehäuse 10, wobei der Zwischenraum zwischen dem Isolationsgehäuse 10 und dem Pumpengehäuse 2 der Kryopumpe als Isolationsraum 3 ausgebildet ist. Es ist vorzugsweise Isolierung durch Vakuum vorzusehen. Der Pumpenkolben 1 ist mittels einer axial bewegbaren Kolbenstange 4 mit dem den Antrieb besorgenden Hydraulikkolben 7 verbunden. Dieser läuft in dem Hydraulikgehäuse 11, dessen Arbeitsräume 8 beidseits des Hydraulikkolbens 7 so mit den Hydraulikleitungen 21 verbunden sind, daß der Hydraulikkolben 7 auch in den jeweiligen Umkehrpunkten funktionsgemäß mit dem Hydraulikfluid beaufschlagt werden kann. Der Hydraulikdruck wird von der Hydraulik-Versorgungseinheit 13 (bekannte Technik) bereitgestellt. Die Steuerung des Hydraulikfluids nach Stärke und Richtung (das Fluid in den Hydraulikleitungen 21 ändert seine Strömungsrichtung ständig entsprechend der dem Hydraulikkolben 7 aufzugebenden Hubbewegung) erfolgt durch den vorzugsweise in digitaler Bauart ausgeführten Regler 14. Mit Hilfe eines Software-Programms steuert der Regler 14 das Hydraulik-Servoventil 12: Gesteuert wird die jeweilige Fließrichtung des Hydraulikfluids, die Fließrichtungsumkehr und die Fließmenge, mit der die Hubgeschwindigkeit des Hydraulikkolbens 7 bestimmt wird. Hierzu benötigt der Regier 14 laufend Informationen über die jeweils momentane Position des Hydraulikkolbens 7 in dem Hydraulikgehäuse 11 und über seine Geschwindigkeit. Diese werden mittels des elektrischen Weg- und Geschwindigkeitsaufnehmers 23 erhoben und dem Regler 14 über die Meßwerteleitung 24 laufend zugeführt. Der Weg- und Geschwingigkeitsaufnehmer 23 kann in das Führungsstück 25 integriert werden, was eine kompakte Bauweise erlaubt. Der Regier 14 kontrolliert darüber hinaus die Hydraulik-Versorgungseinheit 13 und liefert Fehlermeldungen bei Ausfall oder Fehlverhalten von einzelnen Komponenten.

Die erfinderisch vorgesehene Bauweise der direkt gekoppelten Hydro- und Kryoteile hat nicht nur den Vorteil hoher Zuverlässigkeit und hoher Kompaktheit, sie ist auch günstig bezüglich Minimierung von Leckagen: Die einzige Stelle, wo dies auftreten kann, ist der Übergang von Hydro- und Kryoteil. Dieser kann bei Bedarf entlüftet und erforderlichenfalls gespült werden, z.B. mit Stickstoff. Zur Minimierung des Wärmeflusses vom Hydroteil zum Kryoteil kann die Kolbenstange 4 als Rohr und das Führungsstück 25 aus faserverstärktem Kunststoff ausgeführt werden.

Zur Funktionsweise: Der Pumpenkolben 1 saugt gemäß dem ihm vom Hydraulikkolben 7 vorgegebenen Rhythmus das Kryomedium aus dem Tank 6 über die Ansaugleitung 5 in die Arbeitsräume 9, drückt es von dort über die Druckleitungen 17 und über den Wärmetauscher 16 in die Einspritzdüsen 18. Zur Verhinderung von Rückflüssen sind in den Saugleitungen 5 und in den Druckleitungen 17 Rückschlagventile 26 vorgesehen. Ein elektronischer Regler 14 regelt die Bewegung des Hydraulikkolbens so, daß ein möglichst gleichmäßiger Förderstrom erreicht wird. In der Saugleitung 5 und in der Druckleitung 17 können Absperrventile 22 und 15 vorgesehen werden, die vom Regler 14 über die Leitungen Absperrventil 20 gesteuert und kontrolliert werden. Ihr Zweck: Nach Abschalten des Triebwerkes verhindern die Absperrventile 22 und 15 ein Nachlaufen von Treibstoff.

In der Figur 1 sind weitere erforderliche Elemente wie der Hydraulikkühler, die Drains für das Hydraulikmedium und für das kryogene Medium zwischen Kryo- und Hydroteil sowie die Abdichtung der Kolbenstange 4 nicht eingetragen, weil sie nicht erfindungsrelevant bzw. Stand der Technik sind.

Auf die industrielle Anwendbarkeit der hier für Flugtriebwerke dargestellten Förder- und Zumeßeinheit für kryogene Medien wird hingewiesen. Ferner wird darauf hingewiesen, daß anstelle des hydraulischen Linearmotors ein elektrischer Linearmotor als Antrieb für das erfindungsgemäße elektronisch geregelte Förder- und Zumeßsystem gewählt werden kann.
- Figur 1: zeigt schematisch die Anordnung der Bauelemente für die kryogene Kraftstoff-Förderung und Zumessung, hier mit einer doppeltwirkenden Kryopumpe.
- Figur 2a: zeigt das Kraftstoffdurchsatzprofil über der Zeitachse für eine doppeltwirkende Kryopumpe,
- Figur 2b: zeigt das Profil für zweidoppeltwirkende Kryopumpen, die um 90° phasenverschoben arbeiten,
und
- Figur 2c: zeigt das Profil von zwei einfachwirkenden Kryopumpen, die um 180° phasenverschoben arbeiten.

### Bezugszeichenliste

- 1.: Pumpenkolben
- 2.: Pumpengehäuse
- 3.: Isolationsraum
- 4.: Kolbenstange
- 5.: Ansaugleitung
- 6.: Kryotank
- 7.: Hydraulikkolben
- 8.: Arbeitsräume Hydraulikantrieb
- 9.: Arbeitsräume Kryopumpe
- 10.: Isolationsgehäuse
- 11.: Hydraulikgehäuse
- 12.: Hydraulik-Servoventile
- 13.: Hydraulik-Versorgungseinheit
- 14.: Regler
- 15.: Absperrventil (druckseitig)
- 16.: Wärmetauscher
- 17.: Druckleitung Kryomedium
- 18.: Verdampferdüsen
- 19.: Leitung Regelungssignale Servoventile
- 20.: Leitung Absperrventil
- 21.: Hydraulikleitungen
- 22.: Absperrventil (saugseitig)
- 23.: Weg- und Geschwindigkeitsaufnehmer
- 24.: Messwerteleitung
- 25.: Führungsstück
- 26.: Rückschlagventil

## Patentansprüche

1. Verfahren für die Förderung und Zumessung kryogener Treibstoffe vorzugsweise bei Flugtriebwerken mit folgenden Merkmalen:
Fördern des kryogenen Treibstoffes, beispielsweise flüssiger Wasserstoff bei minus 250 °C, aus einem Tank (6) zur Einspritzdüse (18) mittels einer Kolbenpumpe,
Antreiben der Kolbenpumpe mittels eines hydraulischen Linearmotors, wobei die Kolbenpumpe für die Förderung des kryogenen Treibstoffs und der sie antreibende hydraulische Linearmotor eine gekoppelte Einheit bilden,
**gekennzeichnet durch**
folgende Merkmale:
Steuern des hydraulischen Linearmotors und damit des Kraftstoffdurchsatzes nach Menge und Förderdruck **durch** einen programmgesteuerten Regler (14), vorzugsweise digitaler Bautechnik, wobei der Regler (14) den hydraulischen Linearmotor über ein Servoventil (12) derart steuert, dass zwischen den Bereichen der Kolbenumkehrbewegung eine konstante Geschwindigkeit eines Hydraulikkolbens (7) und damit eines Pumpenkolbens (1) für einen konstanten Kraftstoffdurchsatz über der Zeitachse erreicht wird, und eine momentane Position des Hydraulikkolbens (7) sowie seine jeweilige Geschwindigkeit laufend mittels eines elektrischen Weg- und Geschwindigkeitsaufnehmers (23) an einer Kolbenstange (4) erhoben und dem Regler (14) zugeleitet werden.

2. Verfahren gemäß Anspruch 1,
**gekennzeichnet dadurch, dass**
als Kolbenpumpe eine Kolbenpumpe von doppelt wirkender Bauart eingesetzt wird.

3. Verfahren gemäß Anspruch 2,
**gekennzeichnet dadurch, dass**
zur Minimierung der Druck- und Durchsatzschwankungen des kryogenen Treibstoffes zwei doppelt wirkende, parallel mit 90° Phasenverschiebung arbeitenden Kolbenpumpen eingesetzt werden.

4. Verfahren gemäß Anspruch 1,
**gekennzeichnet dadurch, dass**
zur Minimierung der Druck- und Durchsatzschwankungen des kryogenen Treibstoffes zwei einfach wirkende, parallel mit 180° Phasenverschiebung arbeitende Kolbenpumpen eingesetzt werden.

5. Anordnung für die Förderung und Zumessung kryogener Treibstoffe vorzugsweise bei Flugtriebwerken mit folgenden Merkmalen:
einer Kolbenpumpe zur Förderung des kryogenen Treibstoffes aus einem Kryotank (6) zu Einspritzdüsen (18), wobei die Kolbenpumpe aus einem Pumpenkolben (1), einem Pumpengehäuse (2), einer Kolbenstange (4) sowie saugseitigen und druckseitigen Leitungen (5) und (16) für das Kryomedium besteht,
einem hydraulischen Linearmotor zum Antrieb des Pumpenkolbens (1) und der Kolbenstange (4), wobei der Linearmotor aus einem Hydraulikkolben (7) sowie einem Hydraulikgehäuse (11), einer Hydraulik-Versorgungseinheit (13) und Hydraulikleitungen (21) besteht, und der Pumpenkolben (1), der Hydraulikkolben (7) und die Kolbenstange (4) als starr verbundene, axial bewegbare Einheit ausgebildet sind,
**gekennzeichnet durch**
folgende Merkmale:
einen Regler (14), vorzugsweise digitaler Bauart, zur Steuerung des hydraulischen Linearmotors, wobei der Regler (14) ein Programm zur Steuerung eines Hydraulik-Servoventils (12) sowie zur Schaltung eines in der Ansaugleitung (5) angeordneten Absperrventils (22) und eines in der Druckleitung (17) angeordneten Absperrventils (15) enthält,
einen elektrischen Weg- und Geschwindigkeitsaufnehmer (23), der derart ausgebildet ist, dass dessen Signale bezüglich Position und Geschwindigkeit des Hydraulikkolbens (7) und damit des Pumpenkolbens (1) über eine Messwerteleitung (24) dem Regler (14) zugeführt werden, wobei der Weg- und Geschwindigkeitsaufnehmer (23) vorzugsweise im Führungsstück (25) integriert ist,
ein Isolationsgehäuse (10), welches das Pumpengehäuse (2) derart umgibt, dass zwischen beiden eine den Wärmefluss minimierende Isolierung, vorzugsweise Vakuum, vorhanden ist, und
einen Wärmetauscher (16) zwischen der Kolbenpumpe und den Einspritzdüsen (18).

6. Anordnung gemäß Anspruch 5,
**gekennzeichnet dadurch, dass**
die Kolbenstange als Rohr ausgebildet ist und aus einem Material mit niedriger Wärmeleitung besteht.

7. Anordnung gemäß Anspruch 5,
**gekennzeichnet dadurch, dass**
das Führungsstück (25) aus Material mit niedriger Wärmeleitfähigkeit wie z.B. faserverstärkten Kunststoffen besteht.

8. Anordnung gemäß Anspruch 5,
**gekennzeichnet dadurch, dass**
zur Minimierung von Druck- und Durchsatzschwankungen zwei doppelt wirkende, parallel arbeitende Kolbenpumpen mit jeweils eigenem Linearmotor und Servoventil vorhanden sind, die mit einer 90° Phasenverschiebung betrieben werden.

9. Anordnung gemäß Anspruch 5,
**gekennzeichnet dadurch, dass**
zur Minimierung von Druck- und Durchsatzschwankungen zwei einfach wirkende, parallel arbeitende Kolbenpumpen mit 180° Phasenverschiebung vorhanden sind.

10. Anordnung für die Förderung und Zumessung kryogener Treibstoffe vorzugsweise bei Flugtriebwerken mit folgenden Merkmalen:
einer Kolbenpumpe zur Förderung des kryogenen Treibstoffes aus einem Kryotank (6) zur Einspritzdüse (18), wobei die Kolbenpumpe aus einem Pumpenkolben (1), einem Pumpengehäuse (2), einer Kolbenstange (4), sowie saugseitigen und druckseitigen Leitungen (5) und (17) für das Kryomedium besteht,
einem Linearmotor zum Antrieb des Pumpenkolbens (1) und der Kolbenstange (4), wobei der Linearmotor aus einem Kolben (7) sowie einem Gehäuse (11), einer Versorgungseinheit (13) und Leitungen (21) besteht, wobei der Pumpenkolben (1), der Kolben (7) und die Kolbenstange (4) als starr verbundene axial bewegbare Einheit ausgebildet sind,
**gekennzeichnet durch**
folgende Merkmale:
einen elektrischen Linearmotor,
einen Regler (14), vorzugsweise digitaler Bauart, zur Steuerung des elektrischen Linearmotors, wobei der Regler (14) ein Programm zur Steuerung enthält,
einem elektrischen Weg- und Geschwindigkeitsaufnehmer (23), der derart ausgebildet ist, dass dessen Signale bezüglich Position und Geschwindigkeit des Kolbens (7) und damit des Pumpenkolbens (1) über eine Messwerteleitung (24) dem Regler (14) zugeführt werden, wobei der Weg- und Geschwindigkeitsaufnehmer (23) vorzugsweise im Führungsstück (27) integriert ist,
ein Isolationsgehäuse (10), welches das Pumpengehäuse (2) derart umgibt, dass zwischen beiden eine den Wärmefluss minimierende Isolierung, vorzugsweise Vakuum, vorhanden ist, und
ein Wärmetauscher (16) zwischen der Kolbenpumpe und den Einspritzdüsen (18).

## Claims

1. Method for delivering and metering cryogenic fuels, preferably in aircraft engines, with the following features:
delivering the cryogenic fuel, for example liquid hydrogen at minus 250°C, from a tank (6) to the injection nozzle (18) by means of a piston pump,
driving the piston pump by means of a hydraulic linear motor, wherein the piston pump for delivering the cryogenic fuel and the hydraulic linear motor which drives it form a coupled unit,
**characterised by**
the following features:
controlling the hydraulic linear motor and thus the fuel throughput according to quantity and delivery pressure through a program-controlled regulator (14), preferably of digital type, wherein the regulator (14) controls the hydraulic linear motor via a servovalve (12) so as to obtain between the regions of the piston reversing movement a constant speed of a hydraulic piston (7) and thus of a pump piston (1) for a constant fuel throughput against the tine axis, and an instantaneous position of the hydraulic piston (7) as well as its respective speed are constantly ascertained by means of an electrical displacement and speed transducer (23) at a piston rod (4) and fed to the regulator (14).

2. Method according to Claim 1,
**characterised in that**
a piston pump of the double-acting type is used as piston pump.

3. Method according to Claim 2,
**characterised in that**
two double-acting piston pumps working in parallel in phase quadrature are used to minimise the pressure and throughput fluctuations of the cryogenic fuel.

4. Method according to Claim 1,
**characterised in that**
two single-acting piston pumps working in parallel in phase opposition are used to minimise the pressure and throughput fluctuations of the cryogenic fuel.

5. Arrangement for delivering and metering cryogenic fuels, preferably in aircraft engines, with the following features:
a piston pump for delivering the cryogenic fuel from a cryotank (6) to injection nozzles (18), wherein the piston pump consists of a pump piston (1), a pump casing (2), a piston rod (4) as well as lines (5) and (16) on the intake and delivery side for the cryomedium,
a hydraulic linear motor for driving the pump piston (1) and the piston rod (4), wherein the linear motor consists of a hydraulic piston (7) as well as a hydraulic casing (11), a hydraulic supply unit (13) and hydraulic lines (21), and the pump piston (1), the hydraulic piston (7) and the piston rod (4) are formed as a rigidly connected, axially mobile unit,
**characterised by**
the following features:
a regulator (14), preferably of digital type, for controlling the hydraulic linear motor, wherein the regulator (14) contains a program for controlling a hydraulic servovalve (12) as well as for switching a hydraulic shut-off valve (22), which is disposed in the intake line (5), and a shut-off valve (15), which is disposed in the delivery line (17),
an electrical displacement and speed transducer (23), which is formed such that the signals thereof relating to the position and speed of the hydraulic piston (7) and thus of the pump piston (1) are fed via a measured value line (24) to the regulator (14), wherein the displacement and speed transducer (23) is preferably integrated in the guide piece (25),
an insulating casing (10), which surrounds the pump casing (2) such that an insulation, preferably a vacuum, which minimises the heat flow is provided between the two casings, and
a heat exchanger (16) between the piston pump and the injection nozzles (18).

6. Arrangement according to Claim 5,
**characterised in that**
the piston rod is formed as a tube and consists of a material with low thermal conduction.

7. Arrangement according to Claim 5,
**characterised in that**
the guide piece (25) consists of material with low thermal conductivity such as, e.g. fibre-reinforced plastics.

8. Arrangement according to Claim 5,
**characterised in that**
two double-acting piston pumps working in parallel and each with its own linear motor and servovalve are provided to minimise pressure and throughput fluctuations, which pumps are operated in phase quadrature.

9. Arrangement according to Claim 5,
**characterised in that**
two single-acting piston pumps working in parallel in phase opposition are provided to minimise pressure and throughput fluctuations.

10. Arrangement for delivering and metering cryogenic fuels, preferably in aircraft engines, with the following features:
a piston pump for delivering the cryogenic fuel from a cryotank (6) to the injection nozzle (18), wherein the piston pump consists of a pump piston (1), a pump casing (2), a piston rod (4) as well as lines (5) and (17) on the intake side and the delivery side for the cryomedium,
a linear motor for driving the pump piston (1) and the piston rod (4), wherein the linear motor consists of a piston (7) as well as a casing (11), a supply unit (13) and lines (21), wherein the pump piston (1), the piston (7) and the piston rod (4) are formed as a rigidly connected, axially mobile unit,
**characterised by**
the following features:
an electric linear motor,
a regulator (14), preferably of digital type, for controlling the electric linear motor, wherein the regulator (14) contains a program for control purposes,
an electrical displacement and speed transducer (23), which is formed such that the signals thereof relating to the position and speed of the piston (7) and thus of the pump piston (1) are fed via a measured value line (24) to the regulator (14), wherein the displacement and feed transducer (23) is preferably integrated in the guide piece (27),
an insulating casing (10), which surrounds the pump casing (2) such that an insulation, preferably a vacuum, which minimises the heat flow is provided between the two casings, and
a heat exchanger (16) between the piston pump and the injection nozzles (18).

## Revendications

1. Procédé pour le transport et le dosage de carburants cryogènes, de préférence dans le cas de groupes motopropulseurs, comportant les caractéristiques suivantes :
transport du carburant cryogène, par exemple de l'hydrogène liquide à -250°C, d'un réservoir (6) à un injecteur (18) au moyen d'une pompe à piston,
entraînement de la pompe à piston au moyen d'un moteur linéaire hydraulique, la pompe à piston pour le transport du carburant cryogène et le moteur linéaire hydraulique entraînant cette dernière formant une unité couplée,
**caractérisé par**
les caractéristiques suivantes :
commande du moteur linéaire hydraulique et ainsi du débit de carburant, en quantité et pression de refoulement, par un régulateur (14) commandé par programme, de préférence de technique numérique, le régulateur (14) commandant le moteur linéaire hydraulique par l'intermédiaire d'une servo-soupape (12) de telle sorte qu'est obtenue, entre les zones du mouvement d'inversion du piston, une vitesse constante d'un piston hydraulique (7) et ainsi d'un piston de pompe (1) pour un débit de carburant constant le long de l'axe de temps, et une position momentanée du piston hydraulique (7), ainsi que sa vitesse instantanée, sont relevées en permanence au moyen d'un capteur électrique de déplacement et de vitesse (23) sur une tige de piston (4) et transmises au régulateur (14).

2. Procédé suivant la revendication 1,
**caractérisé en ce que**
une pompe à piston à double effet est utilisée en tant que pompe à piston.

3. Procédé suivant la revendication 2,
**caractérisé en ce que**
deux pompes à pistons à double effet, fonctionnant en parallèle avec un déphasage de 90°, sont utilisées pour minimiser les fluctuations de pression et de débit du carburant cryogène.

4. Procédé suivant la revendication 1,
**caractérisé en ce que**
deux pompes à piston à simple effet, fonctionnant en parallèle avec un déphasage de 180°, sont utilisées pour minimiser les fluctuations de pression et de débit du carburant cryogène.

5. Dispositif pour le transport et le dosage de carburants cryogènes, de préférence dans le cas de groupes motopropulseurs, comportant les caractéristiques suivantes :
une pompe à piston pour le transport du carburant cryogène d'un réservoir cryogénique (6) à des injecteurs (18), la pompe à piston se composant d'un piston de pompe (1), d'un carter de pompe (2), d'une tige de piston (4), ainsi que de conduites du côté aspiration et du côté refoulement (5) et (16) pour l'agent cryogène,
un moteur linéaire hydraulique pour l'entraînement de la pompe à piston (1) et de la tige de piston (4), le moteur linéaire se composant d'un piston hydraulique (7) ainsi que d'un carter hydraulique (11), d'une unité d'alimentation hydraulique (13) et de conduites hydrauliques (21), et le piston de pompe (1), le piston hydraulique (7) et la tige de piston (4) étant réalisés sous forme d'unité assemblée rigidement, mobile axialement,
**caractérisé par**
les caractéristiques suivantes :
un régulateur (14), de préférence de type numérique, pour la commande du moteur linéaire hydraulique, le régulateur (14) comportant un programme pour la commande d'une servo-soupape hydraulique (12), ainsi que pour la commutation d'une vanne d'arrêt (22) montée dans la conduite d'aspiration (5) et d'une vanne d'arrêt (15) montée dans la conduite de refoulement (17),
un capteur électrique de déplacement et de vitesse (23) réalisé de telle sorte que ses signaux, quant à la position et à la vitesse du piston hydraulique (7) et ainsi du piston de pompe (1), sont transmis au régulateur (14) par l'intermédiaire d'une ligne de valeurs de mesure (24), le capteur de déplacement et de vitesse (23) étant de préférence intégré dans la pièce de guidage (25),
un carter isolant (10), qui entoure le carter de pompe (2) de telle sorte qu'existe entre les deux une isolation, de préférence du vide, minimisant le flux de chaleur, et
un échangeur thermique (16) entre la pompe à piston et les injecteurs (18).

6. Dispositif suivant la revendication 5,
**caractérisé en ce que**
la tige de piston est réalisée sous forme de tube et est en un matériau de faible conduction thermique.

7. Dispositif suivant la revendication 5,
**caractérisé en ce que**
la pièce de guidage (25) est en un matériau de faible conductibilité thermique, tel que par exemple des matières plastiques renforcées par des fibres.

8. Dispositif suivant la revendication 5,
**caractérisé en ce que**
deux pompes à piston à double effet, fonctionnant en parallèle avec un déphasage de 90°, munies chacune d'un moteur linéaire et d'une servo-soupape propre, sont prévues pour minimiser des fluctuations de pression et de débit.

9. Dispositif suivant la revendication 5,
**caractérisé en ce que**
deux pompes à piston à simple effet, fonctionnant en parallèle avec un déphasage de 180°, sont prévues pour minimiser des fluctuations de pression et de débit.

10. Dispositif pour le transport et le dosage de carburants cryogènes, de préférence dans le cas de groupes motopropulseurs, comportant les caractéristiques suivantes :
une pompe à piston pour le transport du carburant cryogène d'un réservoir cryogénique (6) à un injecteur (18), la pompe à piston se composant d'un piston de pompe (1), d'un carter de pompe (2), d'une tige de piston (4), ainsi que de conduites du côté aspiration et du côté refoulement (5) et (16) pour l'agent cryogène,
un moteur linéaire pour l'entraînement du piston de pompe (1) et de la tige de piston (4), le moteur linéaire se composant d'un piston (7) ainsi que d'un carter (11), d'une unité d'alimentation (13) et de conduites (21), le piston de pompe (1), le piston (7) et la tige de piston (4) étant réalisés sous forme d'unité assemblée rigidement, mobile axialement,
**caractérisé par**
les caractéristiques suivantes :
un moteur linéaire électrique,
un régulateur (14), de préférence de type numérique, pour la commande du moteur linéaire électrique, le régulateur (14) comportant un programme pour la commande,
un capteur électrique de déplacement et de vitesse (23) réalisé de telle sorte que ses signaux, quant à la position et à la vitesse du piston (7) et ainsi du piston de pompe (1), sont transis au régulateur (14) par l'intermédiaire d'une ligne de valeurs de mesure (24), le capteur de déplacement et de vitesse (23) étant de préférence intégré dans la pièce de guidage (25),
un carter isolant (10), qui entoure le carter de pompe (2) de telle sorte qu'existe entre les deux une isolation, de préférence du vide, minimisant le flux de chaleur, et
un échangeur thermique (16) entre la pompe à piston et les injecteurs (18).
